# EUROPEAN PATENT APPLICATION

(11) **EP 1 575 319 A2**
(43) Date of publication of application: **14.09.2005**
(21) Application number: 05005511.0
(22) Date of filing: 14.03.2005
(51) Int. Cl.: H04Q 7/36, H04Q 7/38

(54) **System and method for managing safety channel in an orthogonal frequency division multiple access communication system**

(30) Priority: 12.03.2004 KR 2004017060
(71) Applicant: SAMSUNG ELECTRONICS CO., LTD., Gyeonggi-do (KR)
(72) Inventor: Kim, So-Hyun, Suwon-si Gyeonggi-do (KR); Hong, Seung-Eun, Suwon-si Gyeonggi-do (KR); Kang, Hyon-Goo, Suwon-si Gyeonggi-do (KR); Chang, Hong-Sung, Suwon-si Gyeonggi-do (KR); Koo, Chang-Hoi, Suwon-si Gyeonggi-do (KR); Shim, Jae-Jeong, Suwon-si Gyeonggi-do (KR); Lim, Geun-Hwi, Suwon-si Gyeonggi-do (KR); Kim, Jung-Won, Suwon-si Gyeonggi-do (KR); Kang, Hyun-Jeong, Suwon-si Gyeonggi-do (KR); Lee, Sung-Jin, Suwon-si Gyeonggi-do (KR); Son, Yeong-Moon, Suwon-si Gyeonggi-do (KR); Son, Jung-Je, Suwon-si Gyeonggi-do (KR); Park, Jung-Shin, Suwon-si Gyeonggi-do (KR); Lim, Hyoung-Kyu, Suwon-si Gyeonggi-do (KR)
(74) Representative: Grünecker, Kinkeldey, Stockmair & Schwanhäusser Anwaltssozietät

(57) **Abstract**

Disclosed is a method for allocating a safety channel in a wireless communication system which divides a full frequency band into a plurality of subcarrier bands and includes subchannels, each of which is a set of a predetermined number of subbands, each of which is a set of a predetermined number of contiguous subcarriers, where the subchannels include a safety subchannel allocated to particular subscriber stations (SSs), which is unused in a neighbor base station. The method comprises the steps of: transmitting, by the SS, its channel quality information to the base station (BS) when a channel quality of a subchannel allocated to the SS is less than to predetermined reference channel quality; and allocating a safety subchannel to the SS, by the BS upon receiving the channel quality information indicating that the channel quality of the subchannel is less than to the reference channel quality.

## Description

### BACKGROUND OF THE INVENTION

### 1. Field of the Invention

The present invention relates generally to an Orthogonal Frequency Division Multiple Access (OFDMA) communication system, and in particular, to a system and method for managing a safety channel in a communication system using a Time Division Duplex (TDD)-based OFDMA scheme (hereinafter referred to as a "TDD-OFDMA communication system").

### 2. Description of the Related Art

Extensive research is being conducted in the 4^{th} generation (4G) communication system to provide users with services having various levels of Qualities of Service (QoS) supporting a data rate of about 100 Mbps. Compared with the 4G communication system, the 3^{rd} generation (3G) communication system generally supports a data rate of about 384 Kbps in an outdoor channel environment having poorer channel conditions, and supports a data rate of a maximum of 2 Mbps in an indoor channel environment having better channel conditions.

A wireless Local Area Network (LAN) system and a wireless Metropolitan Area Network (MAN) system generally support a data rate of 20 to 50 Mbps. Extensive research is being conducted in the 4G communication system to develop a new communication system guaranteeing mobility and a QoS in the wireless LAN system and the wireless MAN system guaranteeing a higher data rate. In addition, an extensive study of the communication system is made to support a high-speed service provided in the 4G communication system. To this end, extensive research is also being conducted on an Orthogonal Frequency Division Multiplexing (OFDM) scheme as a scheme useful for attaining the high-speed data transmission through wired/wireless channels in the 4G communication system. The OFDM scheme refers to a scheme of transmitting data using multiple carriers, and is a type of a Multi-Carrier Modulation (MCM) scheme which parallel-converts a serial input symbol stream into parallel symbols and modulates the parallel symbols with a plurality of orthogonal subcarriers, i.e. a plurality of subcarrier channels, before transmission.

A multiple access scheme based on the OFDM scheme is the OFDMA scheme. In the OFDMA scheme, subcarriers in one OFDMA symbol are divided between a plurality of users, i.e., subscriber stations (SSs). Communication systems using the OFDMA scheme include systems based on an Institute of Electrical and Electronics Engineers (IEEE) 802.16a standard, an IEEE 802.16d standard, and an IEEE 802.16e standard. The IEEE 802.16d communication system is a system to which the OFDMA scheme is applied to support a broadband transmission network to a physical channel for the wireless MAN system. The IEEE 802.16d communication system is a Broadband Wireless Access (BWA) communication system using a TDD-OFDMA scheme. Therefore, the IEEE 802.16d communication system, in which the OFDMA scheme is applied to the wireless MAN system, transmits a physical channel signal using a plurality of subcarriers, thereby enabling high-speed, high-quality data transmission.

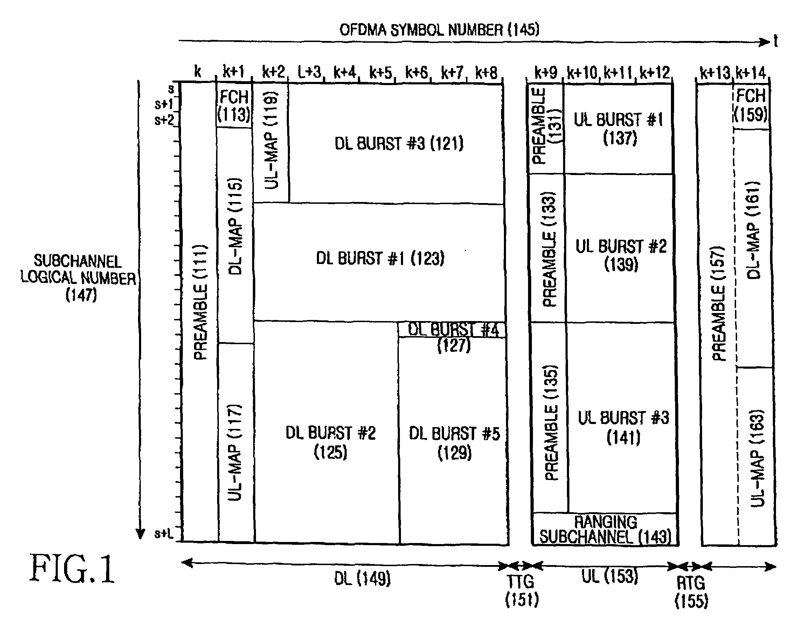

With reference to FIG. 1, a description will now be made of a frame structure used in a conventional TDD-OFDMA communication system.

FIG. 1 is a diagram illustrating a frame structure used in a conventional TDD-OFDMA communication system. Referring to FIG. 1, a frame used in the TDD-OFDMA scheme is divided into a downlink (DL) 149 interval and an uplink (UL) 153 interval. A Transmit/receive Transition Gap (TTG) 151 is formed in an interval where the transition occurs from the DL 149 to the UL 153, as a guard time, and a Receive/transmit Transition Gap (RTG) 155 is formed in an interval where the transition occurs from the UL 153 back to the DL 149, as a guard time. The TDD-OFDMA frame has a vertical axis comprised of a plurality of subchannels 147 and a horizontal axis comprised of a plurality of OFDMA symbols 145.

Describing the DL 149, a preamble 111 for synchronization acquisition is located in a k^{th} OFDMA symbol, and broadcast data information that the SSs will receive in common, such as a frame control header (FCH) 113, DL-MAP 115 and UL-MAP 117, is located in a (K+1)^{th} or (K+2)^{th} OFDMA symbol. The FCH 113 is comprised of two subchannels, and transmits basic information on subchannel, raging and modulation schemes. DL bursts 121, 123, 125, 127 and 129 are located between the (K+2)^{th} OFDMA symbol exclusive of a UL-MAP 119 and a (K+8)^{th} OFDMA symbol. Describing the UL 153, preambles 131, 133 and 135 are located in a (K+9)^{th} OFDMA symbol, and UL bursts 137, 139 and 141 are located between a (K+10)^{th} OFDMA symbol and a (K+12)^{th} OFDMA symbol. In addition, a ranging subchannel 143 is located between the (K+9)^{th} OFDMA symbol and the (K+12)^{th} OFDMA symbol.

Information on positions and allocation of the UL bursts 137, 139 and 141 and the DL bursts 121, 123, 125, 127 and 129 is provided by a base station (BS) controlling a particular cell to the SSs located in the cell through the DL-MAP 115 and the UL-MAP 117. Then the SSs are variably allocated subchannels, each of which has a combination of frequencies and symbols, through the information every frame, and perform communication using the allocated subchannels. That is, the SSs can use different subchannels every frame instead of fixed subchannels. In the TDD-OFDMA communication system using a frequency reuse factor of '1', a neighbor cell also uses the same frequency band, i.e. the same subchannel. For example, it is assumed that an SS belonging to a cell A is located in a boundary of the cell A and uses an s^{th} subchannel, and an SS belonging to a cell B neighboring the cell A is located in a boundary of the cell B and also uses the s^{th} subchannel. In this case, because the SS of the cell A and the SS of the cell B use the same subchannels, the subchannels function as significant interferences to each other in the cell boundary.

### SUMMARY OF THE INVENTION

As described above, because SSs located within the cell boundary communicate with a BS using the same subchannels, the subchannels may cause significant interference to each other. Therefore, it is necessary to propose a new channel for minimizing interference from an SS of a neighbor cell and guaranteeing a QoS within a cell boundary in the OFDMA communication system with the foregoing frame structure.

It is, therefore, an object of the present invention to provide a system and method for minimizing interference between the SSs located with in a cell boundary in a TDD-OFDMA communication system.

It is another object of the present invention to provide a system and method for guaranteeing a QoS of the SSs located within a cell boundary in a TDD-OFDMA communication system.

In accordance with one aspect of the present invention, there is provided a method for allocating a safety channel in a wireless communication system which divides a full frequency band into a plurality of subcarrier bands and includes subchannels, each of which is a set of a predetermined number of subbands, each of which is a set of a predetermined number of contiguous subcarriers, where the subchannels include a safety subchannel allocated to particular subscriber stations (SSs), which is unused in a neighbor base station. The method comprising the steps of transmitting, by the SS, its channel quality information to the base station (BS) when a channel quality of a subchannel allocated to the SS is less than to predetermined reference channel quality; and allocating a safety subchannel to the SS, by the BS upon receiving the channel quality information indicating that the channel quality of the subchannel is less than to the reference channel quality.

In accordance with another aspect of the present invention, there is provided a method for allocating a safety channel by a base station (BS) in a wireless communication system which divides a full frequency band into a plurality of subcarrier bands and includes subchannels, each of which is a set of a predetermined number of subbands, each of which is a set of a predetermined number of contiguous subcarriers, where the subchannels include a safety subchannel allocated to particular subscriber stations (SSs). The method comprises the steps of: receiving channel quality information from the SS; determining channel quality of a subchannel currently received from the SS based on the channel quality information; and selecting a safety channel in a frequency band unused in a neighbor BS, and allocating the selected safety channel to the SS, according to determining the channel quality of the subchannel is less than a predetermined reference channel quality.

In accordance with further another aspect of the present invention, there is provided a method for receiving an allocated safety channel by a subscriber station (SS) in a wireless communication system which divides a full frequency band into a plurality of subcarrier bands and includes subchannels each of which is a set of a predetermined number of subbands, each of which is a set of a predetermined number of contiguous subcarriers, where the subchannels include a safety subchannel allocated to particular SSs located, which is unused in a neighbor base station. The method comprises the steps of: transmitting its channel quality information to the base station (BS) when a channel quality of a subchannel allocated to the SS is less than predetermined reference channel quality; and communicating with the BS using the safety channel which is successfully allocated from the BS.

In accordance with further another aspect of the present invention, there is provided a method for allocating a safety channel by a base station (BS) in a wireless communication system which divides a full frequency band into a plurality of subcarrier bands and includes subchannels, each of which is a set of a predetermined number of subbands, each of which is a set of a predetermined number of contiguous subcarriers, where the subchannels include a safety subchannel allocated to particular subscriber stations (SSs) , which is unused in a neighbor base station, in a state where the BS and the SS communicate with each other using the safety channel. The method comprises the steps of: transmitting to the SS a request message for a report on the safety channel quality information from the SS; determining channel quality of a subchannel transmitted by the SS based on the received channel quality information upon receiving channel quality information from the SS in response to the request; and releasing a safety channel allocated to the SS if it is determined that the channel quality of the subchannel is greater than predetermined reference channel quality.

In accordance with further another aspect of the present invention, there is provided a method for receiving an allocated safety channel by a subscriber station (SS) in a wireless communication system which divides a full frequency band into a plurality of subcarrier bands and includes subchannels, each of which is a set of a predetermined number of subbands, each of which is a set of a predetermined number of contiguous subcarriers, where the subchannels include a safety subchannel allocated to particular SSs located, which is unused in a neighbor base station, in a state where the base station (BS) and the SS communicate with each other using the safety channel. The method comprises the steps of: transmitting by an SS a channel quality information to the BS in response to a channel quality information request from the BS; and releasing communication through the safety channel upon receiving information indicating release of a safety channel in use from the BS.

In accordance with further another aspect of the present invention, there is provided a system for allocating a safety channel in a wireless communication system which divides a full frequency band into a plurality of subcarrier bands and includes subchannels, each of which is a set of a predetermined number of bands, each of which is a set of a predetermined number of contiguous subcarriers, where the subchannels are classified into a diversity subchannel for acquiring a frequency diversity gain, an Adaptive Modulation and Coding (AMC) subchannel for high-speed, high-capacity data transmission, and a safety subchannel allocated to particular subscriber stations (SSs), which is unused in a neighbor base station, in a state where the base station (BS) and the SS do not use the safety channel. The system comprises a SS for transmitting its channel quality information to a BS if the channel quality of its current subchannel is less than predetermined reference channel quality; and a BS for allocating a safety channel to the SS upon receiving the channel quality information indicating that the channel quality of the subchannel is less than the reference channel quality.

In accordance with further another aspect of the present invention, there is provided a system for allocating a safety channel in a wireless communication system which divides a full frequency band into a plurality of subcarrier bands and includes subchannels each of which is a set of a predetermined number of subbands, each of which is a set of a predetermined number of contiguous subcarriers, where the subchannels are classified into a diversity subchannel for acquiring a frequency diversity gain, an Adaptive Modulation and Coding (AMC) subchannel for high-speed, high-capacity data transmission, and a safety subchannel allocated to particular subscriber stations (SSs), which is unused in a neighbor base station, in a state where the base station (BS) and the SS communicate with each other using the safety channel. The system comprises a SS for transmitting its channel quality information to a BS in response to a channel quality information request from the BS; and a BS for releasing a safety channel allocated to the SS upon receiving the channel quality information indicating that channel quality of a subchannel transmitted by the SS is greater than predetermined reference channel quality.

### BRIEF DESCRIPTION OF THE DRAWINGS

The above and other objects, features and advantages of the present invention will become more apparent from the following detailed description when taken in conjunction with the accompanying drawings in which:
FIG 1 is a diagram illustrating a frame structure used in a conventional TDD-OFDMA communication system;
FIG. 2 is a diagram illustrating a frame structure used in a TDD-OFDMA communication system according to an embodiment of the present invention;
FIG. 3 is a flowchart illustrating an operation performed by a BS in response to a safety channel allocation request from an SS in a TDD-OFDMA communication system according to an embodiment of the present invention;
FIG. 4 is a flowchart illustrating an operation of requesting allocation of a safety channel by an SS in a TDD-OFDMA communication system according to an embodiment of the present invention;
FIG. 5 is a flowchart illustrating an operation by a BS for a safety channel in use in a TDD-OFDMA communication system according to an embodiment of the present invention;
FIG. 6 is a flowchart illustrating an operation by a SS for a safety channel in use in a TDD-OFDMA communication system according to an embodiment of the present invention; and
FIG. 7 is a signaling diagram illustrating a process of releasing an allocated safety channel in a TDD-OFDMA communication system according to an embodiment of the present invention.

### DETAILED DESCRIPTION OF THE PREFERRED EMBODIMENT

A preferred embodiment of the present invention will now be described in detail with reference to the annexed drawings. In the following description, a detailed description of known functions and configurations incorporated herein has been omitted for conciseness.

The present invention proposes a new TDD-OFDMA frame structure in an Orthogonal Frequency Division Multiple Access (OFDMA) communication system using a Time Division Duplex (TDD) scheme (hereinafter, referred to as a "TDD-OFDMA communication system"). In particular, the present invention proposes a safety channel and its associated messages to minimize interference between neighbor cells in a cell boundary in the TDD-OFDMA communication system having a plurality of cells, thereby increasing cell capacity.

Before a description of the present invention is given, it should be noted that in the TDD-OFDMA communication system having a multicell configuration in which all cells use a full frequency band (frequency reuse factor is 1), subscriber stations (SSs) located in a cell boundary receive interference signals from other SSs, located in a neighbor cell, which uses the same frequency band, i.e. the same subchannel. Therefore, it is necessary to allocate a frequency band available in a base station (BS) among frequency bands unused in the neighbor cell, to the SSs located in the cell boundary, thereby minimizing the interference signals.

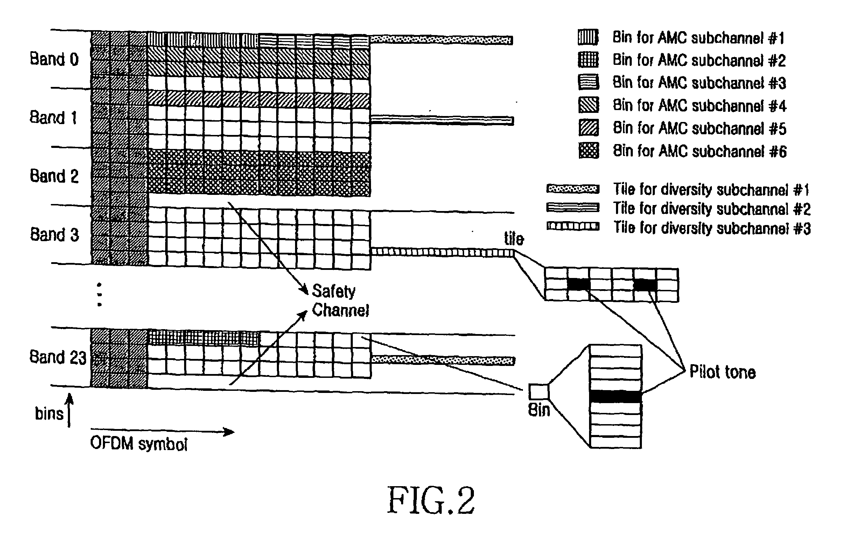

With reference to FIG. 2, a description will now be made of a new frame structure used in a TDD-OFDMA communication system according to an embodiment of the present invention.

FIG. 2 is a diagram illustrating a frame structure used in a TDD-OFDMA communication system according to an embodiment of the present invention. Referring to FIG. 2, in the frame structure, a full subcarrier band is divided into a plurality of bands, for example Band#0 to Band#23 in FIG. 2, and each band is comprised of a plurality of bins or tiles. The bin or tile is comprised of a plurality of subcarriers. Herein, the bin is comprised of 9 consecutive subcarriers in one OFDM symbol, and there is 1 pilot tone and 8 data tones in the bin. The tile is comprised of 3 to 6 consecutive subcarriers, and there are 2 pilot tones and 16 data tones in the tile.

In the frame, the first three OFDM symbols are used for a ranging channel, a Hybrid Automatic Repeat Request (H-ARQ) channel, and a channel quality information (CQI) channel, respectively. The other OFDM symbols are allocated for band Adaptive Modulation and Coding (AMC) channels, diversity channels, and safety channels. The band AMC channels at the front of the frame are allocated on a per band basis and are comprised of 6 bins, and the diversity channels at the rear of the frame are allocated on a subchannel basis and are comprised of three tiles spread over the full subcarrier band. As the band AMC channels are greater than the diversity channels in terms of the area allocated therefor, when the reception quality is high, the band AMC channels can be used for transmitting/receiving large-volume data at high speed by applying a modulation scheme having high coding efficiency. For the safety channel, a part which is laid over all OFDM symbols and one bin is allocated. The safety channel is allocated all symbols in one bin. An SS is allocated a safety channel among safety channels unused in a neighbor cell with a frequency band available in a BS, i.e. an unallocated frequency band.

In order to allocate an appropriate channel according to a state of an SS, a BS should always recognize the state of the SS. If quality of data from the SS decreases gradually, the BS should transmit a message for requesting a report on a state of a channel to the SS in order to detect a change in the state of the channel. The present invention proposes a new channel status request (CH_STA_REQ) message transmitted from the BS to the SS, and a new channel status response (CH_STA_RSP) message through which the SS reports its channel state to the BS. It should be noted herein that the SS can report its channel state to the BS at its own discretion without receiving the CH_STA_REQ message to request allocation of another channel. A format of the CH_STA_REQ message is illustrated in Table 1.

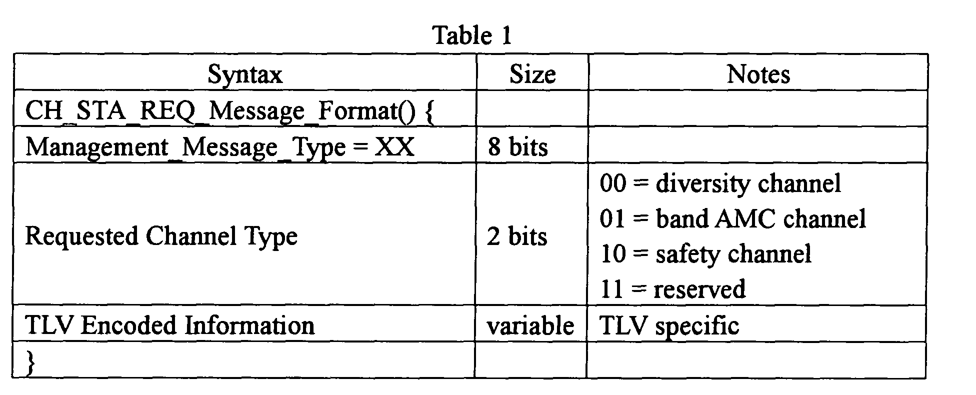

As illustrated in Table 1, the CH_STA_REQ message includes the following information elements (hereinafter, it refers to as 'IE's). A Requested Channel Type (hereinafter, it refers to as 'Requested Channel Type') field indicates a type of field that the BS desires to receive C/I from the SS, and the channel type field has the following meanings according to values recorded in this field:
00 = diversity Channel
01 = band AMC Channel
10 = safety Channel
11 = reserved

Accordingly, the SS measures C/I of the diversity channel when a value recorded in the channel type field is 00 and report the same to BS. Also, when a value recorded in the channel type filed is 01, the SS measures C/I of the band AMC channel and report the same to BS. In addition, when a value recorded in the channel type field is 10, the SS measures C/I of the safety channel and report the same to BS.

The SS transmits a CH_STA_RSP message to the BS to report the quality of a received channel to the BS upon receiving the CH_STA_REQ message from the BS or when a specific condition designated by broadcast information transmitted by the BS is satisfied. A type of channel state information transmitted through the CH_STA_RSP message is determined according to a type of a channel that the SS is currently using together with the BS. For example, when the SS is communicating using a band AMC channel, the SS transmits CQI for each band AMC channel, and when the SS is communicating using a safety channel, the SS transmits CQI for each safety channel. A format of the CH_STA_RSP message is illustrated in Table 2.

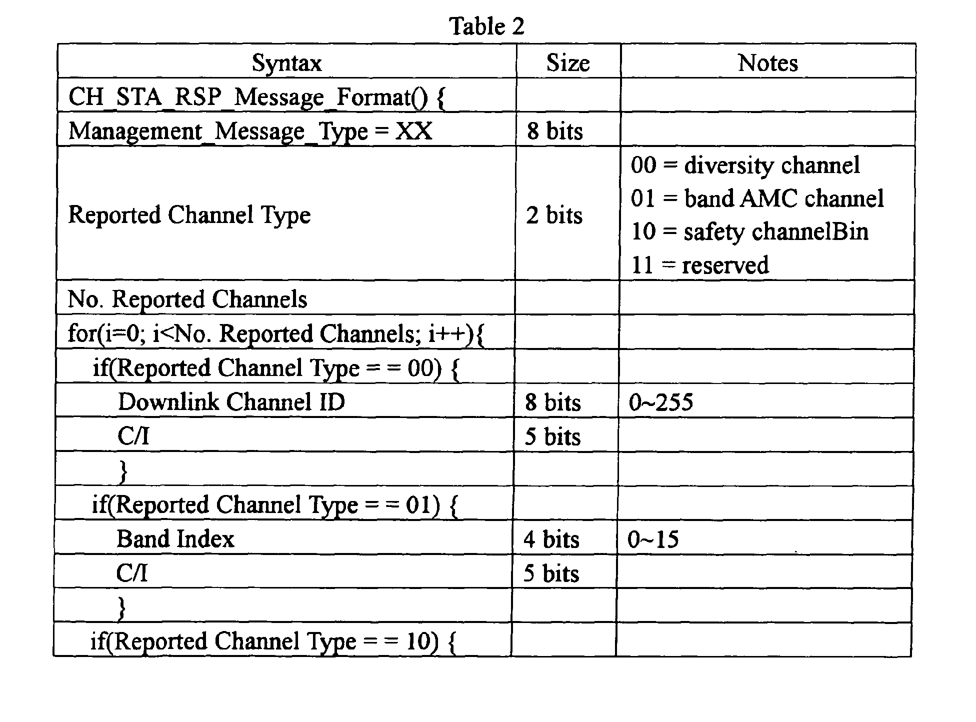

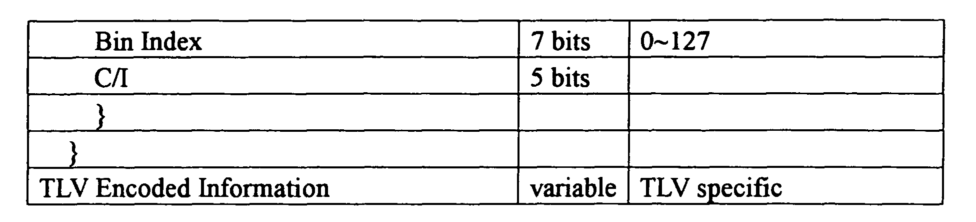

As illustrated in Table 2, among IEs of the CH_STA_RSP message, a Reported Channel Type uses the same values as the values defined for the CH_STA_REQ message, and one of the values is used according to a state of a channel in use by the SS. That is, a value recoded in the Reported Channel Type means a type of Channel corresponding to a channel wherein the C/I is measured and is reported by the SS. And, a value recorded in the Reported Channel Type field has the same meaning as that recorded in the Requested Channel Type field of the CH_STA_REQ message, as follows:
00 = diversity Channel
01 = band AMC Channel
10 = safety Channel
11 = reserved

That is, if the SS reports the C/I of the diversity channel, "00" is recorded in the Requested Channel Type filed. And, if the SS reports the C/I of the band AMC Channel, "01" is recorded in the Requested Channel Type. In addition, if the SS reports the C/I of the safety Channel, "10" is recorded in the Requested Channel Type.

A Downlink Channel ID is an OFDM symbol number indicating each diversity subchannel, a Band Index is an OFDM symbol number for distinguishing each band used for the band AMC, and a Bin Index is an OFDM symbol number indicating a position of a safety channel. Based on a C/I of each band, each bin or a full band, reported by the SS, the BS allocates a diversity channel, a band AMC channel and a safety channel. That is, if a C/I is low as the SS enters a cell boundary, the BS can allocate a safety channel, and if a C/I is greater than a predetermined reference C/I, the BS can normally allocate a diversity channel. The BS can allocate a band AMC channel in order to guarantee a high QoS or transmit/receive data at a high speed.

In order to use a safety channel, the SS and the BS need the following 3 processes:
1. safety channel allocation
2. channel state report for safety channel in use
3. safety channel release

A detailed description will now be made of the foregoing steps.

### 1. Safety Channel Allocation

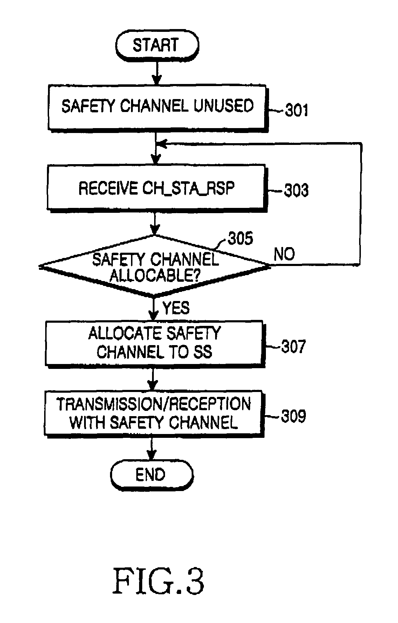

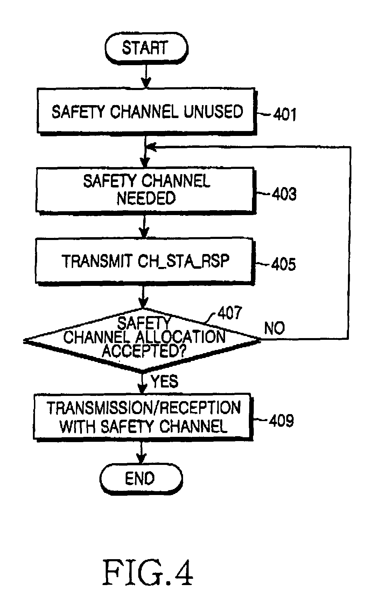

With reference to FIGs. 3 and 4, a description will be made of an operation of a BS for a safety channel allocation and an operation by a SS for a safety channel allocation request.

FIG. 3 is a flowchart illustrating an operation by a SS performed in response to a safety channel allocation request from an SS in a TDD-OFDMA communication system according to an embodiment of the present invention. Referring to FIG. 3, in step 301, the BS does not use a safety channel for an SS. In step 303, the BS receives a CH_STA_RSP message transmitted by the SS. In step 305, the BS determines if a C/I value included in the CH_STA_RSP message transmitted by the SS satisfies a safety channel allocation requested condition, i.e. if the C/I value is less than a predetermined reference C/I value (indicative of bad channel quality). If the safety channel allocation requested condition is satisfied, the BS determines if it can allocate a safety channel taking into consideration the channel quality-related information included in the CH_STA_RSP message and the resource situations of a neighbor BS and a serving BS.

If it is determined that the BS can allocate a safety channel to the SS, the BS proceeds to step 307, and otherwise, the BS returns to step 303. In step 307, the BS allocates to the SS a safety channel in a frequency band that includes an empty safety channel for a neighbor cell of the SS. After allocating an available safety channel to the SS, the BS communicates with the SS using the allocated safety channel in step 309.

With reference to FIG. 3, a description has been made of an operation by a BS performed in response to a safety channel allocation request from an SS in a TDD-OFDMA communication system according to an embodiment of the present invention. With reference to FIG. 4, a description will be made of an operation of requesting allocation of a safety channel by an SS in a TDD-OFDMA communication system according to an embodiment of the present invention.

FIG. 4 is a flowchart illustrating an operation of requesting allocation of a safety channel by an SS in a TDD-OFDMA communication system according to an embodiment of the present invention. Referring to FIG. 4, in step 401, the SS does not use a safety channel. In step 403, the SS measures a C/I to determine the channel quality. If it is determined that the channel quality is poor, i.e. less than a threshold, the SS transmits a CH_STA_RSP message in step 405, recognizing the need for safety channel allocation. The SS transmits a CH_STA_RSP in response to a safety channel allocation request. Alternatively, the SS can report its channel state to the BS at its own discretion through the CH_STA_RSP message. Thus, after transmitting the CH_STA_RSP message to the BS, the SS determines in step 407 if a safety channel has been successfully allocated from the BS. If a safety channel has been successfully allocated from the BS, the SS communicates with the BS using the allocated safety channel in step 409. However, if it is determined in step 407 that no safety channel has been allocated from the BS, the SS retransmits the CH_STA_RSP message to the BS after a lapse of a predetermined time.

### 2. Channel State Report for Safety Channel in Use

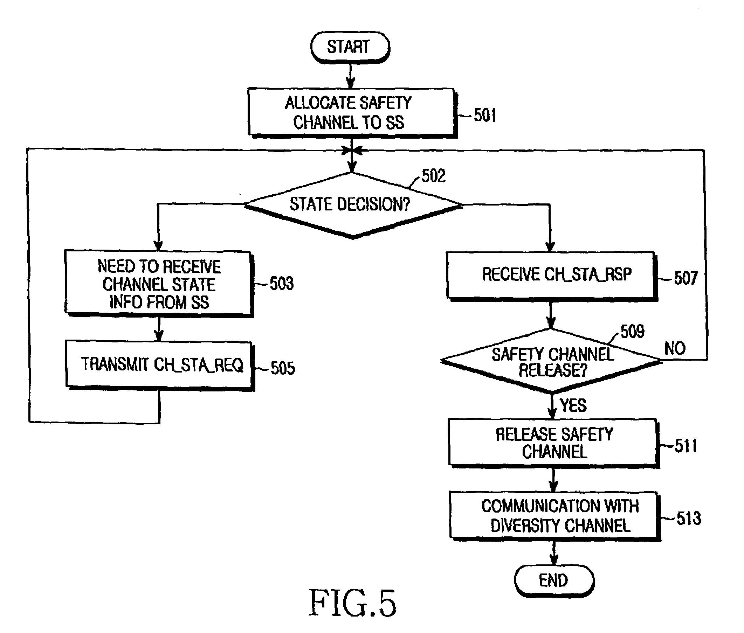

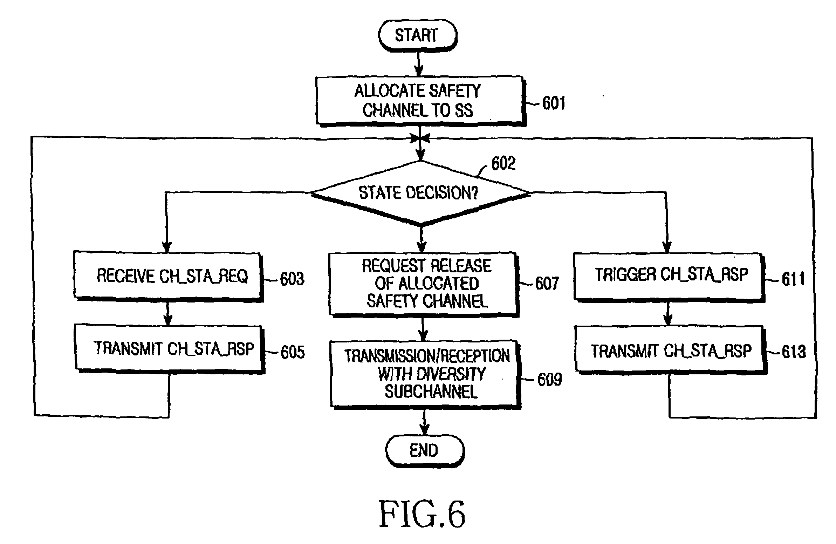

With reference to FIGs. 5 and 6, a description will now be made of BS and SS operations for a channel state report for the safety channel in use.

FIG. 5 is a flowchart illustrating an operation of a BS for a safety channel in use in a TDD-OFDMA communication system according to an embodiment of the present invention. Referring to FIG. 5, in step 501, the BS allocates a safety channel to an SS. In step 502, the BS determines if it needs to receive channel state information from the SS or it has received a CH_STA_RSP message from the SS. After the state decision, the BS proceeds to step 503 or step 507. For example, if the BS needs to receive channel state information from the SS, the BS proceeds to step 503, and if the BS has received a CH_STA_RSP message from the SS, the BS proceeds to step 507. If the BS determines in step 503 that it needs to receive channel state information from the SS, the BS transmits a CH_STA_REQ message to the SS to request a report on a channel state in step 505. However, if the BS has received the CH_STA_RSP message from the SS in step 507, the BS analyzes information included in the received CH_STA_RSP message in step 509 to determine if it will release the safety channel. If the BS determines not release the safety channel, it returns to step 502. However, if the BS determines to release the safety channel, it releases in step 511 the safety channel allocated to the SS. In step 513, the BS communicates with the SS using a diversity channel. As a result, the BS in communication with the SS using a safety channel communicates with the SS using a diversity channel due to the release of the safety channel.

With reference to FIG. 5, a description has been made of an operation of a BS for a safety channel in use in a TDD-OFDMA communication system according to an embodiment of the present invention. Next, with reference to FIG. 6, a description will be made of an operation of an SS for a safety channel in use in a TDD-OFDMA communication system according to an embodiment of the present invention.

FIG. 6 is a flowchart illustrating an operation of an SS for a safety channel in use in a TDD-OFDMA communication system according to an embodiment of the present invention. Referring to FIG. 6, in step 601, the SS uses a safety channel. In step 602, the SS determines if it has received a CH_STA_REQ message from a BS, if it has received a safety channel release request from the BS, or it needs to transmit a CH_STA_RSP message. After the state decision, the SS proceeds to step 603, 607 or 611 If the SS has received the CH_STA_REQ message from the BS in step 603, the SS transmits a CH_STA_RSP message to the BS in response to the CH_STA_REQ message in step 605. The CH_STA_RSP message includes a Reported Channel Type value determined by the SS and C/I information measured according to the determined Reported Channel Type value.

If the SS has received in step 607 a CH_STA_REQ message including parameter information indicating a request for releasing the safety channel from the BS due to an increase in its channel state, the SS performs data communication with the BS using a diversity subchannel in step 609 after the safety channel to the BS is released.

In step 611, if the SS desires to trigger, or transmit, a CH_STA_RSP message while waiting to transmit the CH_STA_RSP message periodically or depending on a channel state, the SS proceeds to step 613 where it repeatedly transmits the CH_SAT_RSP message to report its channel state to the BS.

### 3. Safety Channel Release

The BS can release a safety channel in use when there is no more data to exchange with the SS. In addition, the BS can stop the use of the safety channel based on the channel state information included in a CH_STA_RSP message received from the SS and a resource state of the BS. If the safety channel in use is released, the SS transitions back to a state where it uses a diversity subchannel.

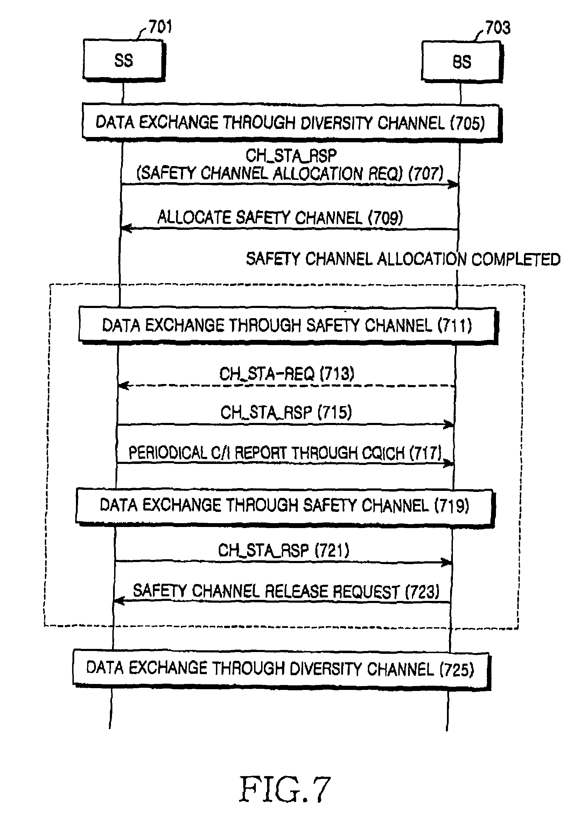

With reference to FIG. 7, a description will now be made of a signaling procedure for releasing an allocated safety channel in a TDD-OFDMA communication system according to an embodiment of the present invention.

FIG. 7 is a signaling diagram illustrating a process of releasing an allocated safety channel in a TDD-OFDMA communication system according to an embodiment of the present invention. Referring to FIG 7, an SS 701 and a BS 703 exchange data with each other, using a diversity channel (Step 705). Upon detecting a deterioration of its channel state, the SS 701 transmits a CH_STA_RSP message to the BS 703 to request allocation of a safety channel (Step 707). If there is a bin unallocated for a safety channel of a neighbor cell, the BS 703 allocates a safety channel to the SS 701 (Step 709). Thereafter, the SS 701 and the BS 703 exchange data with each other through the allocated safety channel (Step 711). During the data exchange, if the BS 703 requires information related to a channel state of the SS 701, the BS transmits a CH_STA_REQ message to the SS 701 (Step 713). Upon receiving the CH_STA_REQ message, the SS 701 transmits a CH_STA_RSP message to the BS 703 (Step 715). Alternatively, the SS 701 transmits the CH_STA_RSP message to the BS 703 at its own discretion (Step 715). Even while using the allocated safety channel, the SS 701 periodically measures a C/I of a physical channel and transmits the measured C/I to the BS 703 (Step 717). The SS 701 exchanges data with the BS 703 through the safety channel allocated from the BS 703 (Step 719). The BS 703 receives a CH_STA_RSP message for a channel of the SS 701, a C/I of which is greater than a predetermined reference C/I (Step 721). In this case, the BS 703 sends a safety channel release request to the SS 701 (Step 723). In this manner, if the CQI is greater than the reference C/I, the BS 703 releases the channel. In response to the safety channel release request, the SS 701 releases the safety channel and exchanges data with the BS 703 through a diversity channel (Step 725).

As described above, the present invention proposes a new frame structure for a safety channel and its management scheme to enable an SS located in a cell boundary to minimize interference from an SS of a neighbor cell in a TDD-OFDMA communication system, thereby guaranteeing a QoS of and minimizing the interference to the SS located in the cell boundary, and contributing to an increase in cell capacity.

While the invention has been shown and described with reference to a certain preferred embodiment thereof, it will be understood by those skilled in the art that various changes in form and details may be made therein without departing from the spirit and scope of the invention as defined by the appended claims.

## Claims

1. A method for allocating a safety channel in a wireless communication system which divides a full frequency band into a plurality of subcarrier bands and includes subchannels, each of which is a set of a predetermined number of subbands, each of which is a set of a predetermined number of contiguous subcarriers, where the subchannels include a safety subchannel allocated to particular subscriber stations (SSs), which is unused in a neighbor base station, the method comprising the steps of:
transmitting, by the SS, its channel quality information to the base station (BS) when a channel quality of a subchannel allocated to the SS is less than to predetermined reference channel quality; and
allocating a safety subchannel to the SS, by the BS upon receiving the channel quality information indicating that the channel quality of the subchannel is less than to the reference channel quality.

2. The method of claim 1, wherein the safety channel is comprised of at least one bin which is comprised of a plurality of subcarriers.

3. The method of claim 2, wherein the plurality of subcarriers contiguous each other.

4. The method of claim 1, wherein the channel quality information includes a carrier-to-interference ratio.

5. The method of claim 1, further comprising the step of determining whether the subchannel in use retains or not according to the channel quality of the subchannel allocated to the SS using the reference channel quality..

6. The method of claim 1, further comprising the step of transmitting, by the SS to the BS, a message including the channel quality information at predetermined periods.

7. A method for allocating a safety channel by a base station (BS) in a wireless communication system which divides a full frequency band into a plurality of subcarrier bands and includes subchannels, each of which is a set of a predetermined number of subbands, each of which is a set of a predetermined number of contiguous subcarriers, where the subchannels include a safety subchannel allocated to particular subscriber stations (SSs), , the method comprising the steps of:
receiving channel quality information from the SS;
determining channel quality of a subchannel currently received from the SS based on the channel quality information; and
selecting a safety channel in a frequency band unused in a neighbor BS, and allocating the selected safety channel to the SS, according to determining the channel quality of the subchannel is less than a predetermined reference channel quality.

8. The method of claim 7, further comprising the step of transmitting to the SS a request message for a report on a safety channel information.

9. The method of claim 8, wherein the request message includes a channel type field representing type information of a channel, a report on a state of which the BS desires to receive from the SS.

10. The method of claim 9, wherein the channel type information includes information on a channel used when the BS communicates with the SS; wherein the channel type information represents a diversity channel, a band AMC channel, and a safety channel.

11. The method of claim 7, wherein the received channel quality information from the SS includes a channel type field which represents a channel type in use by the SS, that is one of a diversity channel, a band AMC channel, and a safety channel.

12. The method of claim 7, wherein the safety channel is comprised of at least one bin which is comprised of a plurality of subcarriers.

13. The method of claim 12, wherein the plurality of subcarriers contiguous each other.

14. The method of claim 7, wherein the channel quality information includes a carrier-to-interference ratio.

15. The method of claim 7, further comprising the step of retaining the subchannel in use if the channel quality of the subchannel allocated to the SS is greater than the reference channel quality.

16. A method for receiving an allocated safety channel by a subscriber station (SS) in a wireless communication system which divides a full frequency band into a plurality of subcarrier bands and includes subchannels each of which is a set of a predetermined number of subbands, each of which is a set of a predetermined number of contiguous subcarriers, where the subchannels include a safety subchannel allocated to particular SSs located, which is unused in a neighbor base station, the method comprising the steps of:
transmitting its channel quality information to the base station (BS) when a channel quality of a subchannel allocated to the SS is less than predetermined reference channel quality; and
communicating with the BS using the safety channel which is successfully allocated from the BS.

17. The method of claim 16, wherein the safety channel is comprised of at least one bin which is comprised of a plurality of subcarriers.

18. The method of claim 17, wherein the plurality of subcarriers contiguous each other.

19. The method of claim 16, wherein the channel quality information includes a carrier-to-interference ratio.

20. The method of claim 16, further comprising the step of transmitting a message including the channel quality information to the BS at predetermined periods.

21. A method for allocating a safety channel by a base station (BS) in a wireless communication system which divides a full frequency band into a plurality of subcarrier bands and includes subchannels, each of which is a set of a predetermined number of subbands, each of which is a set of a predetermined number of contiguous subcarriers, where the subchannels include a safety subchannel allocated to particular subscriber stations (SSs), which is unused in a neighbor base station, in a state where the BS and the SS communicate with each other using the safety channel, the method comprising the steps of:
transmitting to the SS a request message for a report on the safety channel quality information from the SS;
determining channel quality of a subchannel transmitted by the SS based on the received channel quality information upon receiving channel quality information from the SS in response to the request; and
releasing a safety channel allocated to the SS if it is determined that the channel quality of the subchannel is greater than predetermined reference channel quality.

22. The method of claim 21, wherein the request message includes a channel type field representing type information of a channel, a report on a stat of which the BS desires to receive from the SS.

23. The method of claim 22, wherein the channel type information includes information on a channel used when the BS communicates with the SS; wherein the channel type information represents a diversity channel, a band AMC channel, and a safety channel.

24. The method of claim 21, wherein the safety channel is comprised of at least one bin which is comprised of a plurality of subcarriers.

25. The method of claim 24, wherein the plurality of subcarriers contiguous each other.

26. The method of claim 21, wherein the channel quality information includes a carrier-to-interference ratio.

27. The method of claim 21, further comprising the step of requesting the SS to release the safety subchannel in use if there is no more data to transmit.

28. The method of claim 21, further comprising the step of communicating with the SS using a diversity subchannel if the allocated safety channel is released.

29. The method of claim 21, further comprising the step of retaining the safety channel in use if channel quality of the subchannel transmitted by the SS is less than the reference channel quality.

30. A method for receiving an allocated safety channel by a subscriber station (SS) in a wireless communication system which divides a full frequency band into a plurality of subcarrier bands and includes subchannels, each of which is a set of a predetermined number of subbands, each of which is a set of a predetermined number of contiguous subcarriers, where the subchannels include a safety subchannel allocated to particular SSs located, which is unused in a neighbor base station, in a state where the base station (BS) and the SS communicate with each other using the safety channel, the method comprising the steps of:
transmitting by an SS a channel quality information to the BS in response to a channel quality information request from the BS; and
releasing communication through the safety channel upon receiving information indicating release of a safety channel in use from the BS.

31. The method of claim 30, wherein the transmitted channel quality information to the BS includes a channel type field which represents a channel type in use by the SS, that is one of a diversity channel, a band AMC channel, and a safety channel.

32. The method of claim 30, wherein the safety channel is comprised of at least one bin which is comprised of a plurality of subcarriers.

33. The method of claim 32, wherein the plurality of subcarriers contiguous each other.

34. The method of claim 30, wherein the channel quality information includes a carrier-to-interference ratio.

35. The method of claim 30, further comprising the step of transmitting the channel quality information at predetermined periods.

36. The method of claim 30, further comprising the step of communicating with the BS using a diversity subchannel if the safety channel in use is released by the BS.

37. A system for allocating a safety channel in a wireless communication system which divides a full frequency band into a plurality of subcarrier bands and includes subchannels, each of which is a set of a predetermined number of bands, each of which is a set of a predetermined number of contiguous subcarriers, where the subchannels are classified into a diversity subchannel for acquiring a frequency diversity gain, an Adaptive Modulation and Coding (AMC) subchannel for high-speed, high-capacity data transmission, and a safety subchannel allocated to particular subscriber stations (SSs), which is unused in a neighbor base station, in a state where the base station (BS) and the SS do not use the safety channel, the system comprising:
a SS for transmitting its channel quality information to a BS if the channel quality of its current subchannel is less than predetermined reference channel quality; and
a BS for allocating a safety channel to the SS upon receiving the channel quality information indicating that the channel quality of the subchannel is less than the reference channel quality.

38. The system of claim 37, wherein the safety channel is comprised of at least one bin which is comprised of a plurality of subcarriers.

39. The system of claim 38, wherein the plurality of subcarriers contiguous each other.

40. The system of claim 37, wherein the channel quality information includes a carrier-to-interference ratio.

41. The system of claim 37, wherein the BS retains the subchannel in use if channel quality of the subchannel allocated to the SS is greater than the reference channel quality.

42. The system of claim 37, wherein the SS transmits a message including the channel quality information to the BS at predetermined periods.

43. The system of claim 37, wherein the safety channel allocated to the SS by the BS is a safety channel in the same frequency band as a frequency band of a safety channel currently unused in a neighbor BS.

44. A system for allocating a safety channel in a wireless communication system which divides a full frequency band into a plurality of subcarrier bands and includes subchannels each of which is a set of a predetermined number of subbands, each of which is a set of a predetermined number of contiguous subcarriers, where the subchannels are classified into a diversity subchannel for acquiring a frequency diversity gain, an Adaptive Modulation and Coding (AMC) subchannel for high-speed, high-capacity data transmission, and a safety subchannel allocated to particular subscriber stations (SSs), which is unused in a neighbor base station, in a state where the base station (BS) and the SS communicate with each other using the safety channel, the system comprising:
a SS for transmitting its channel quality information to a BS in response to a channel quality information request from the BS; and
a BS for releasing a safety channel allocated to the SS upon receiving the channel quality information indicating that channel quality of a subchannel transmitted by the SS is greater than predetermined reference channel quality.

45. The system of claim 44, wherein the safety channel is comprised of at least one bin which is comprised of a plurality of subcarriers.

46. The system of claim 45, wherein the plurality of subcarriers contiguous each other.

47. The system of claim 44, wherein the channel quality information includes a carrier-to-interference ratio.

48. The system of claim 44, wherein the BS requests the SS to release the safety channel in use if there is no more data to transmit.

49. The system of claim 44, wherein the BS and the SS communicate with each other using the diversity subchannel if the allocated safety channel is released.

50. The system of claim 44, wherein the BS retains the safety channel in use if channel quality of a subchannel transmitted by the SS is lower than the reference channel quality.

51. The system of claim 44, wherein the SS transmits the channel quality information at predetermined periods.
